**Europäisches Patentamt**

**European Patent Office**

**Office européen des brevets**

(19)

(11) Veröffentlichungsnummer: **0 008 346**
**B1**

(12) ## EUROPÄISCHE PATENTSCHRIFT

(45) Veröffentlichungstag der Patentschrift:
**12.05.82**

(21) Anmeldenummer: **79102320.3**

(22) Anmeldetag: **09.07.79**

(51) Int. Cl.³: **B 23 C 3/06**

(54) **Kurbelwellenfräsmaschine.**

(30) Priorität: **19.08.78 DE 2836341**

(43) Veröffentlichungstag der Anmeldung:
**05.03.80 Patentblatt 80/5**

(45) Bekanntmachung des Hinweises auf die Patenterteilung:
**12.05.82 Patentblatt 82/19**

(84) Benannte Vertragsstaaten:
**AT CH FR GB IT SE**

(56) Entgegenhaltungen:
**DE-A1-2 419 556**
**DE-A1-2 630 047**
**DE-B1-2 836 341**

(73) Patentinhaber: **Gebr. Heller Maschinenfabrik GmbH,
Postfach 1428, D-7440 Nürtingen (DE)**

(72) Erfinder: **Schmid, Karlheinz, Amselweg 2,
D-7441 Neckartenzlingen (DE)**

(74) Vertreter: **Reinländer & Bernhardt Patentanwälte,
Orthstrasse 12, D-8000 München 60 (DE)**

## Kurbelwellenfräsmaschine

Die Erfindung betrifft eine Kurbelwellenfräsmaschine nach dem Oberbegriff des Anspruchs 1. Solche Kurbelwellenfräsmaschinen sind bekannt (DE-OS 2 630 047).

Der Abstand der Scheibenfräser von der Spindelnase ist maßgeblich für den genauen Abstand der gefrästen Lager, insbesondere für die Lage des Kurbelwellenpaßlagers. Dieser Abstand wird deshalb bei der Montage des Fräswerkzeuges so genau wie möglich eingestellt.

Diese Einstellung bei der Montage des Fräswerkzeuges bleibt jedoch infolge der Erwärmung des Fräswerkzeuges in Betrieb nicht erhalten, da sich das Fräswerkzeug entsprechend der Erwärmung in der Länge dehnt, so daß der Abstand der einzelnen Scheibenfräser von der Spindelnase größer wird.

Diese axiale Dehnung des Fräswerkzeuges ist zu unterscheiden von der radialen Dehnung des Fräswerkzeuges, die bei Innenfräsern, d. h. Fräsmaschinen einer anderen als im Oberbegriff des Anspruchs 1 definierten Art, eine wesentliche Rolle spielt und der dadurch Rechnung getragen werden kann, daß die Trommel des Fräswerkzeuges mit Lüfterschaufeln ausgestattet wird und der Messerträger gegen die Lagerung axial versetzt angeordnet wird (DE-OS 2 419 556).

Bei bisher üblichen Kurbelwellenfräsmaschinen der eingangs genannten Art war die Antriebsspindel mit einem Axiallager ausgestattet, das selbstverständlich eine gewisse Entfernung vom nächstliegenden Teil des Fräswerkzeuges haben muß, so daß die Wärmedehnung der Antriebsspindel bereits die Lage der Spindelnase, also im allgemeinen der Bezugsebene für die axiale Lage der Scheibenfräser, verändert.

Aufgabe der Erfindung ist es, den Einfluß der durch Erwärmung verursachten Längendehnung des Fräswerkzeuges auf die Abstände der gefrästen Lagerstellen der Kurbelwelle so klein wie möglich zu halten, und diese Aufgabe wird erfindungsgemäß durch die im Kennzeichenteil des Anspruchs 1 aufgeführten Maßnahmen gelöst. Damit ist die Änderung der Lage des Bezugspunktes ausgeschaltet.

Darüber hinaus ist es bei der erfindungsgemäßen Kurbelwellenfräsmaschine ohne weiteres möglich, das Axiallager des Fräswerkzeuges sehr nahe an die Stelle zu bringen, an der das Minimum der durch Wärmedehnung verursachten Wanderungen der Bearbeitungsstelle erwünscht ist. Eine solche Stelle ist das Kurbelwellenpaßlager, so daß zweckmäßigerweise die Ausführung nach Anspruch 2 verwendet wird. Eine andere solche Stelle ist die Längsmitte des Fräswerkzeugs, und wenn das Minimum an dieser Stelle gewünscht wird, wird zweckmäßigerweise die Ausführung nach Anspruch 3 verwendet. Beide Maßnahmen können u. U.

auch kombiniert angewandt werden, indem von zwei dem zur Bearbeitung des Paßlagers vorgesehenen Scheibenfräser benachbarten Lagerstellen die der Längsmitte am nächsten liegende als Axiallager ausgebildet wird.

Wenn die axiale Lage des Fräswerkzeuges gemäß der Erfindung nicht mehr durch die Antriebsspindel festgelegt werden muß, ergibt sich zunächst der zusätzliche Vorteil, daß diese nicht mehr, wie bisher, als Frässpindel, vor allem eben mit hoch belastbaren Axiallagern und einem aufwendigen Kurzkegel mit axialer Paßfläche ausgestattet werden muß, so daß überraschenderweise der Gesamtaufwand sich verringert, obwohl natürlich der Aufwand für das Fräswerkzeug und dessen Lagerung durch das Axiallager merklich erhöht wird.

Die Erfindung soll anhand der Zeichnungen näher erläutert werden; es zeigt

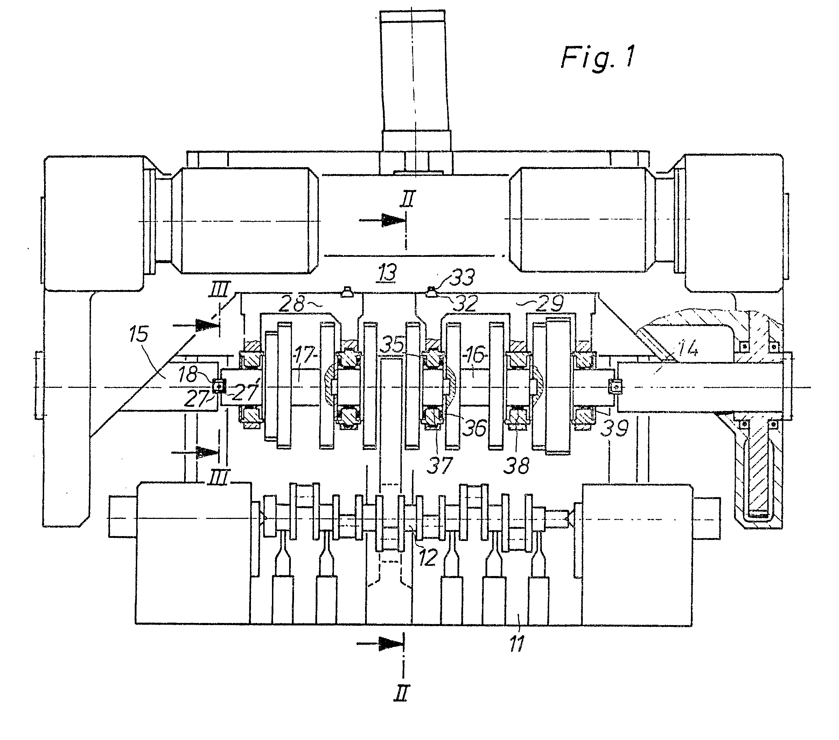

Fig. 1 eine teilweise geschnittene Draufsicht auf eine Kurbelwellenfräsmaschine,

Fig. 2 einen Schnitt längs der Linie II-II in Figur 1 und

Fig. 3 einen Teilschnitt längs der Linie III-III in Figur 1.

Die in Zeichnung dargestellte Kurbelwellenfräsmaschine besteht aus einem Maschinenbett 11, auf dem die Kurbelwelle 12 zwischen Zentrierspitzen gelagert ist, und einem Frässchlitten 13, der auf Kurbelwelle 12 zu bewegbar ist und in dem zwei Antriebsspindeln 14 und 15 drehbar gelagert sind, mit denen jeweils ein Fräswerkzeug 16 bzw. 17 gekuppelt ist, das mehrere, in axialem Abstand voneinander befindliche Scheibenfräser aufweist und seinerseits ebenfalls im Frässchlitten 13 gelagert ist, wie noch näher erläutert wird.

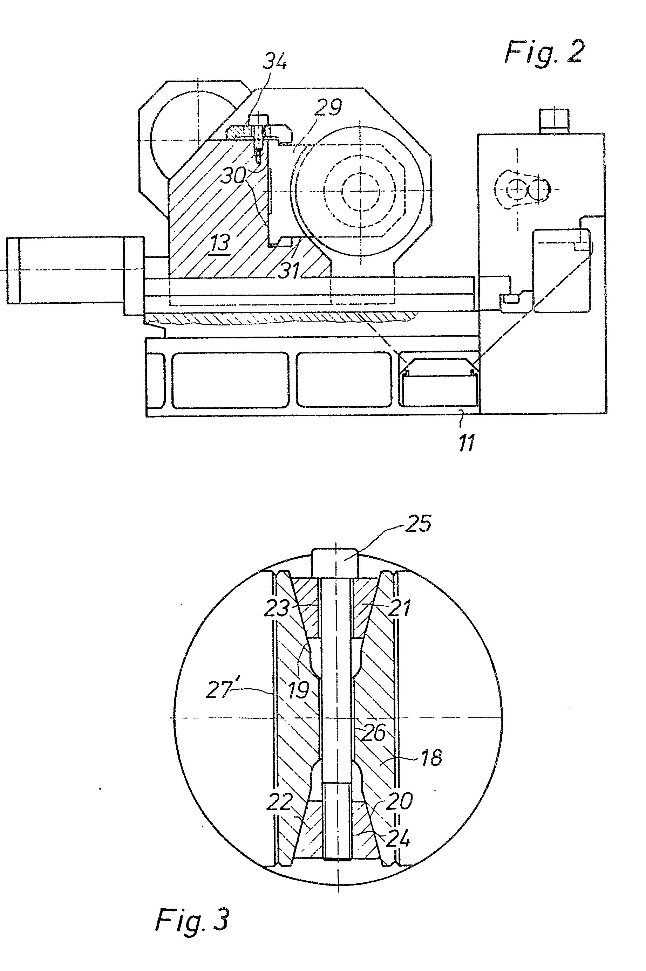

Die Kupplung zwischen der Antriebsspindel 15 und dem Fräswerkzeug 17 besteht aus einem spreizbaren Querkeil, der in Figur 3 näher veranschaulicht ist. Dieser Querkeil 18 weist, wie in Figur 3 erkennbar, zwei radial nach außen weisende V-förmige Ausnehmungen 19 und 20 auf, in denen V-förmige Keile 21 bzw. 22 sitzen. Der Keil 21 weist eine durchgehende Zylinderbohrung 23 auf und der Keil 22 eine Gewindebohrung 24. Ein Schraubbolzen 25 erstreckt sich durch die Zylinderbohrung 23 des Keils 21 und eine in deren Verlängerung liegende durchgehende Bohrung 26 im Keil 18 in die Gewindebohrung 24 des Keils 22. Wird der Bolzen 25 angezogen, dehnt der Keil 21 bzw. 22 die V-Aussparung 19 bzw. 20, so daß die Außenabmessung des Querkeils 18 größer wird.

Der Querkeil 18 sitzt in entsprechenden Nuten 27, 27', des Fräswerkzeugs 17 bzw. der Antriebsspindel 15, so daß bei Dehnung des Querkeils 18 in der beschriebenen Weise sich dessen Außenflächen an die Innenflächen der Nuten 27, 27' anlegen, so daß Drehmomente übertragen werden können. Axialkräfte können aber nicht übertragen werden, da sich bei Auftreten von Axialkräften die Außenflächen des Querkeils 18 gegen die Innenflächen der Nuten 27, 27' verschieben.

Eine solche Verbindung mit spreizbarem Querkeil wird derzeit zur Ausführung der Erfindung bevorzugt, kann jedoch auch durch andere Verbindungen ersetzt werden, die Drehmomente, aber keine Axialkräfte übertragen.

Die Verbindungen zwischen der Antriebsspindel 14 und dem Fräswerkzeug 16 ist in gleicher Weise aufgebaut.

Im Frässchlitten 13 sind zwei Lagergestelle 28 und 29 angeordnet. Das Lagergestell 29 ist durch eine Paßfläche 30 und eine zweite, dazu senkrechte Paßfläche 31 mit Bezug auf die Antriebsspindel 14 zentriert und durch einen Paßkeil 32 und eine entsprechende Paßnute 33 im Schlitten 13 in Richtung der Spindelachse zentriert. Durch Klammern, von denen eine bei 34 in Figur 2 dargestellt ist, wird es in der zentrierten Stellung gehalten.

Das Lagergestell 28 ist in gleicher Weise im Frässchlitten 13 zentriert.

Das Lagergestell 29 weist ein Axiallager, bestehend aus zwei auf gegenüberstehenden Flächen laufenden Nadellagern 35 und 36, und drei Radiallager 37, 38 und 39 auf, in denen das Fräswerkzeug 16 gelagert ist.

In ähnlicher Weise weist das Lagergestell 28 ein Axiallager und zwei Radiallager auf, eine nähere Erläuterung erscheint überflüssig.

Im Betrieb wird zunächst das Fräswerkzeug 16 im Lagergestell 29 außerhalb der Maschine geprüft, so daß die bisher erforderliche gesonderte Fräserprüfvorrichtung überflüssig wird. Dabei können natürlich eventuell Wendeplatten gewendet bzw. ausgewechselt werden, soweit erforderlich. Anschließend wird das Lagergestell 29 mit dem Fräswerkzeug 16 in den Schlitten 13 eingesetzt, wobei sich das Lagergestell an den erwähnten Paßflächen bzw. mit dem Paßkeil zentriert, wodurch auch das Fräswerkzeug 16 sofort zentriert ist. Anschließend wird die Antriebsverbindung zur Antriebsspindel 14, bei der dargestellten Ausführungsform durch Anziehen des Bolzens 25, hergestellt. Die gleichen Vorgänge gelten auch für das dargestellte Lagergestell 28 mit dem Fräswerkzeug 17, eine Wiederholung ist überflüssig.

Nach Aufnahme des Betriebes erwärmen sich die beiden Fräswerkzeuge 16 und 17 und dehnen sich. Die Längsdehnung wirkt sich dabei an den Bearbeitungsstellen (Kurbelwellenhauptlagern), die den Axiallagern 35 und 36 bzw. den entsprechenden Lagern des Fräswerkzeugs 17 benachbart sind, überhaupt nicht aus und an den übrigen Bearbeitungsstellen der Kurbelwelle 12 nur entsprechend dem Abstand des betreffenden Scheibenfräsers vom Axiallager des betreffenden Fräswerkzeuges.

Dehnungen der Antriebsspindeln 14 und 15 wirken sich überhaupt nicht auf die Lage der einzelnen Scheibenfräser der beiden Fräswerkzeuge 16 und 17 aus. Durch die einwandfreie Lagerung der Fräswerkzeuge ergibt sich eine bessere Abstützung und damit eine größere Bearbeitungsgenauigkeit und Standzeit der Fräswerkzeuge. Wie schematisch für die Antriebsspindel 14 angedeutet, kann diese im Vergleich zu Frässpindeln mit wesentlich geringerem Aufwand gelagert werden, so daß der Aufwand an dieser Stelle reduziert ist; der Aufwand für die Bearbeitung der Antriebsspindeln 14 und 15 und der Fräswerkzeuge 16 und 17 ist darüber hinaus noch erheblich dadurch verringert, daß die bisher notwendige aufwendige Kurzkegelverbindung (mit einer Kegelpaßfläche und einer Paß-Planfläche, die aufeinander abgestimmt werden müssen) entfällt.

## Patentansprüche

1. Kurbelwellenfräsmaschine mit wenigstens einer im Frässchlitten (13) drehbar gelagerten Antriebsspindel (14, 15) und jeweils einem mit dieser kuppelbaren, ebenfalls im Frässchlitten (13) drehbar gelagerten Fräswerkzeug (16, 17) mit mehreren, in axialem Abstand voneinander befindlichen Scheibenfräsern, dadurch gekennzeichnet, daß eine Lagerstelle des Fräswerkzeugs (16, 17) als Axiallager (35, 36) ausgebildet ist und daß die Kupplung (18, 27, 27') zwischen Fräswerkzeug (16, 17) und Antriebsspindel (14, 15) Drehmomente, aber keine Axialkräfte überträgt.

2. Kurbelwellenfräsmaschine nach Anspruch 1, dadurch gekennzeichnet, daß die dem zur Bearbeitung des Kurbelwellenpaßlagers vorgesehenen Scheibenfräser nächstliegende Lagerstelle als Axiallager (35, 36) ausgebildet ist.

3. Kurbelwellenfräsmaschine nach Anspruch 1 oder 2, dadurch gekennzeichnet, daß die der Längsmitte des Fräswerkzeugs (16, 17) nächstliegende Lagerstelle als Axiallager (35, 36) ausgebildet ist.

4. Kurbelwellenfräsmaschine nach Anspruch 1, 2 oder 3, dadurch gekennzeichnet, daß die Kupplung (18, 27, 27') zwischen Fräswerkzeug (16, 17) und Antriebsspindel (14, 15) aus einem spreizbaren Querkeil (Fig. 3) besteht.

## Claims

1. Crankshaft milling machine having at least one drive spindel (14, 15) rotatably supported in the milling slide (13) and milling tool means (16, 17) adapted to be coupled to a respective drive spindle (14, 15) and also rotatably supported in said milling slide (13) and having a plurality of axially spaced side-milling cutters, characterized in that one bearing of said milling tool (16, 17) is designed as an axial thrust bearing (35, 36) and that the coupling means (18, 27, 27') between milling tool (16, 17) and drive spindle (14, 15) transmits torques but no axially directed forces.

2. Crankshaft milling machine according to claim 1, characterized in that the bearing closest to the side-milling cutter provided for machining the crankshaft thrust bearing is designed as axial thrust bearing (35, 36).

3. Crankshaft milling machine according to claim 1 or 2, characterized in that the bearing closest to the longitudinal center of the milling tool (16, 17) is designed as axial thrust bearing (35, 36).

4. Crankshaft milling machine according to claim 1, 2 or 3, characterized in that the coupling means (18, 27, 27') between milling tool (16, 17) and drive spindle (14, 15) comprises an expandable transversely directed wedge (fig. 3).

**Revendications**

1. Fraiseuse de vilebrequins comprenant au moins une broche d'entraînement montée rotative sur un chariot de fraisage et un outil de fraisage, qui peut être accouplé à la broche d'entraînement, qui est monté aussi à rotation sur le chariot de fraisage et qui présente plusieurs fraises à disque se trouvant à distance les unes des autres suivant la direction axiale, caractérisée en ce qu'un point d'appui de l'outil de fraisage est agencé en palier à charge axiale et l'accouplement entre l'outil de fraisage et la broche d'entraînement transmet des couples de rotation mais pas de force axiale.

2. Fraiseuse de vilebrequins suivant la revendication 1, caractérisée en ce que le point d'appui le plus proche de la fraise à disque prévue pour l'usinage du palier de butée du vilebrequin est agancée en palier à charge axiale.

3. Fraiseuse de vilebrequins suivant la revendication 1 ou 2, caractérisée en ce que le point d'appui le plus proche du milieu de la dimension longitudinale de l'outil de fraisage est agencé en palier à charge axiale.

4. Fraiseuse de vilebrequins suivant la revendication 1, 2 ou 3, caractérisée en ce que l'accouplement entre l'outil de fraisage et la broche d'entraînement est constitué d'une clavette transversale expansible.

*Fig. 1*

Fig. 2

Fig. 3